# EUROPEAN PATENT SPECIFICATION

(11) **EP 2 738 529 B1**
(45) Date of publication and mention of the grant of the patent: **04.11.2015**
(21) Application number: 13185860.7
(22) Date of filing: 25.09.2013
(51) Int. Cl.: G01J 1/02, G01J 5/04, G01D 11/24

(54) **Photoelectric sensor**
Fotoelektrischer Sensor
Capteur photo-électrique

(30) Priority: 30.11.2012 CN 201220652585 U
(43) Date of publication of application: 04.06.2014
(73) Proprietor: OMRON CORPORATION, Kyoto-shi, Kyoto 600-8530 (JP)
(72) Inventor: Iida, Hiroyuki, Kyoto-shi, Kyoto 600-8530 (JP); Ye, Jiong, Kyoto-shi, Kyoto 600-8530 (JP)
(74) Representative: Horn Kleimann Waitzhofer Patentanwälte PartG mbB

(56) References cited:
- EP-A1- 1 878 624
- US-A- 4 880 974
- US-A1- 2006 191 825
- US-A1- 2010 265 986

## Description

### BACKGROUND OF THE INVENTION

### TECHNICAL FIELD

The present invention relates to a photoelectric sensor.

### RELATED ART

In the prior art, there is a photoelectric sensor, comprising a case and a main body part set inside the case. Generally speaking, according to this photoelectric sensor, the case and the main body part are fixedly connected each other by a connecting member (usually a positioning pin or a threaded member and the like) which is simultaneously inserted into a positioning through hole in the case and a corresponding positioning hole in the main body part.

However, as the case is cylindrical usually, and the main body part is columnar correspondingly, when the case and the main body part are assembled, the positioning through hole in the case and the corresponding positioning hole in the main body part may not be aligned usually owing to angle phase difference between the case and the main body part, and thus the connecting member may not be smoothly pressed into the positioning through hole in the case and the corresponding positioning hole in the main body part. Further, if the connecting member is forcefully pressed thereinto, it is possible to damage the case or the main body part. In the actual production process, the defects described above often cause that the photoelectric sensor has low production efficiency and higher rejection rate.
In US 4 880 974 A, a photoelectric sensor comprises a thin plate-shaped optical body, a circuit block and a casing for incorporating therein the optical body and the circuit block: A nearly infrared light incoming through a front surface of the casing is reflected upon a first reflective surface of the optical body. Following this first reflection, a second reflection is made upon a second reflective surface thereof. The light having passed through a light collective lens is received by a photoelectric converting element and converted into electric signals for output. Since the optical body comprises a plurality of reflective surfaces, an optical path up to the photoelectric converting element can be incorporated compactly within the thin plate-shaped optical body.
US 2006/191825 A1 proposes a monitoring port assembly for a fluid treatment system, such as for use in an ultra-violet water treatment system. The port assembly comprises a sensor port cup having a port for access to an interior of the fluid treatment vessel. The port is offset from the central axis of the sensor port cup. A cylindrical body, having an offset through-hole to receive a sensor assembly, is disposed within the sensor port cup for rotational movement about the central longitudinal axis between an operational position where the offset through-hole is aligned and coincident with the port, and a servicing position where the offset through-hole is displaced relative to the port. Sensors can be safely and conveniently removed from or installed into a port in the fluid treatment vessel by rotating the cylindrical body from the servicing to the operational position.
In US 2010/265986 A1, a tip assembly for an IR thermometer apparatus includes a heat sink having a heat sink cavity and a tip section and a fluid path and at least one hydraulic port. The tip assembly also includes an IR sensor mechanically seated in the tip section and thermally coupled to the heat sink. The tip assembly also includes an electrical connector configured to provide an electrical connection to the tip assembly. A fluid having a fluid temperature is introduced into the fluid path via the hydraulic port. The fluid causes the heat sink and the IR sensor to substantially reach one or more pre-determined temperatures by thermal conduction during calibration of the tip assembly. Another tip assembly having an internal heat source is described. Another tip assembly having an internal heat pump is described. A method to calibrate a tip assembly is also described.
EP 1 878 624 A1 discloses a device for detecting objects near vehicles, particularly for applications in parking aid, anti-break in systems or the like, comprising at least one support associable with the bodywork of a vehicle, at least one sensor associable with the support, suitable for detecting at least one object near the vehicle and associable electronically with at least one processing and control unit by interposition of electronic transmission means, the support comprises connection means to the electronic transmission means in an assembly configuration in which the electronic transmission means are associated electronically and directly with at least a pair of metal terminals of the sensor.

### SUMMARY

An object of the present invention is to provide a novel photoelectric sensor, which can overcome the defects described above in the prior art by a simple structure.

To be specific, one aspect of the present invention provides a photoelectric sensor, comprising: a case and a main body part set inside the case, wherein the case is cylindrical and the main body part is columnar; and further, the circumferential wall of the case is provided with at least one case connecting hole, the outer surface of the circumferential wall of the main body part is also provided with at least one main body connecting hole, and the case and the main body part are fixedly connected together by at least one connecting member configured to be inserted into the case connecting hole and the main body connecting hole; and the photoelectric sensor further comprising: a positioning protrusion and a positioning recess, one of the positioning protrusion and the positioning recess is provided on the inner surface of the circumferential wall of the case, and the other is provided on the outer surface of the circumferential wall of the main body part, and the positioning recess is suitable for receiving a part or all of the positioning protrusion; when the positioning recess receives a part or all of the positioning protrusion, the position of the case connecting hole is consistent with that of the main body connecting hole, and the opening width of an opening, configured to allow the insertion of the positioning protrusion, of the positioning recess is larger than or equal to the width of the positioning protrusion; and when the main body part is set inside the case, a part or all of the positioning protrusion is positioned in the positioning recess.

With such a structure, the relative rotation between the case and the main body part may be prevented by a simple structure, thereby greatly improving the production efficiency of the photoelectric sensor and reducing the rejection rate in the production process, and accordingly, reducing the labor cost and the production cost.

Another example provides a photoelectric sensor, comprising: a case and a main body part set inside the case, wherein the case is cylindrical and the main body part is columnar; and further, the circumferential wall of the case is provided with at least one case connecting hole, the outer surface of the circumferential wall of the main body part is also provided with at least one main body connecting hole, and the case and the main body part are fixedly connected together by at least one connecting member configured to be inserted into the case connecting hole and the main body connecting hole; and the photoelectric sensor further comprising: a positioning through hole provided on the circumferential wall of the case and a positioning recess provided on the outer surface of the circumferential wall of the main body part; and when the position of the positioning recess is consistent with that of the positioning through hole, the position of the case connecting hole is consistent with that of the main body connecting hole.

Preferably, in accordance with the photoelectric sensor provided by the present invention, the positioning recess is a groove.

Preferably, in accordance with the photoelectric sensor provided by the present invention, the case is a metal case.

### BRIEF DESCRIPTION OF THE DRAWINGS

Fig. 1 is a sectional view of the photoelectric sensor according to embodiment 1 of the present invention;
Fig. 2 is a sectional view of the photoelectric sensor according to embodiment 2 of the present invention;
Fig. 3 is a sectional view of the photoelectric sensor according to an example and
Fig. 4 is an exploded schematic view of the photoelectric sensor according to an example.

### DETAILED DESCRIPTION

Preferred embodiments of the present invention are described below in combination with figures.

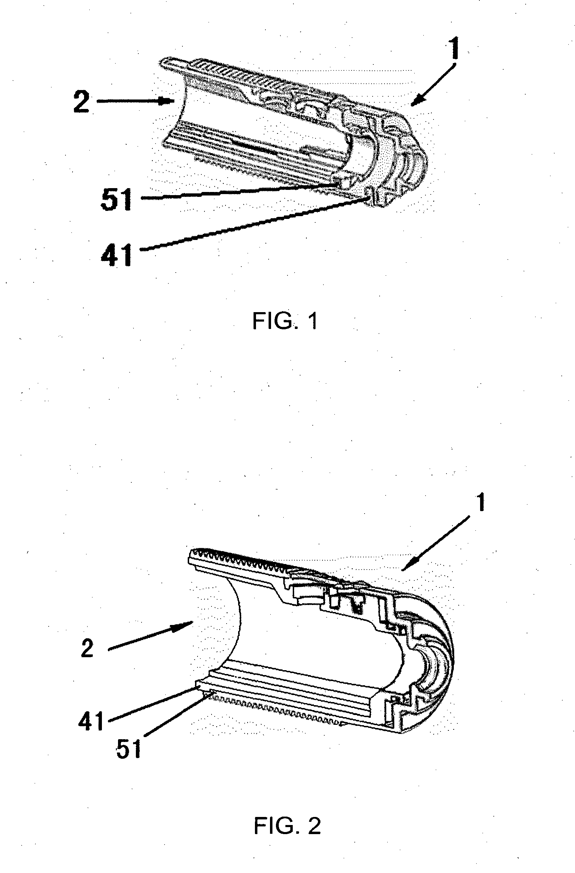

Fig. 1 is a sectional view of the photoelectric sensor according to embodiment 1 of the present invention; and Fig. 2 is a sectional view of the photoelectric sensor according to embodiment 2 of the present invention.

To be specific, as described in Figs. 1 and 2 of the description below, one aspect of the present invention provides a photoelectric sensor, including a case 1 and a main body part 2 set inside the case. Further, the case 1 is cylindrical, and the main body part is columnar. Further, the circumferential wall of the case 1 is provided with at least one case connecting hole, and the outer surface of the circumferential wall of the main body part 2 is also provided with at least one main body connecting hole (not shown in figures). The case 1 and the main body part 2 are fixedly connected together by at least one connecting member configured to be inserted into the case connecting hole and the main body connecting hole. More specifically, according to the present invention, at least one case connecting hole, at least one main body connecting hole and at least one connecting member define a one-to-one correspondence relation. The photoelectric sensor further includes a positioning protrusion 41 and a positioning recess 51, one of the positioning protrusion 41 and the positioning recess 51 is provided on the inner surface of the circumferential wall of the case 1, and the other is provided on the outer surface of the circumferential wall of the main body part 2. Further, the positioning recess 51 is suitable for receiving a part or all of the positioning protrusion 41, and when the positioning recess 51 receives a part or all of the positioning protrusion 41, the position of the case connecting hole is consistent with that of the main body connecting hole; and in addition, the opening width of an opening, configured to allow the insertion of the positioning protrusion 41, of the positioning protrusion 51 is larger than or equal to the width of the positioning protrusion 41. When the main body part 2 is set inside the case 1, a part or all of the positioning protrusion 41 is positioned in the positioning recess 51.

With of such structure, the relative rotation between the case 1 and the main body part 2 is prevented by a simple structure, and when the positioning recess 51 receives a part or all of the positioning protrusion 41, the position of the case connecting hole is consistent with that of the main body connecting hole, thus the connecting member may be easily inserted into the case connecting hole and the main body connecting hole, thereby greatly improving the production efficiency of the photoelectric sensor and reducing the rejection rate in the production process, and accordingly, reducing the labor cost and the production cost.

More specifically, as shown in Fig. 1 of the description, in accordance with embodiment 1 of the present invention, the positioning protrusion 41 is provided on the inner surface of the circumferential wall of the case 1, and the positioning recess 51 is provided in a position, corresponding to the positioning protrusion 41, on the outer surface of the circumferential wall of the main body part 2. When the main body part 2 is set inside the case 1, the positioning protrusion 41 is fitted in the positioning recess 51. More specifically, as shown in Fig. 1 of the description, the positioning protrusion 41 provided on the inner surface of the circumferential wall of the case 1 protrudes from the inner surface of the circumferential wall of the case 1 to the interior of the case 1, and the positioning recess 51 is configured to be suitable for receiving a part or all of the positioning protrusion 41. Further, when the positioning recess 51 receives a part or all of the positioning protrusion 41, the position of the case connecting hole is consistent with that of the main body connecting hole. Further, with the purpose of inserting the positioning protrusion 41 to the positioning recess 51 smoothly, the opening, configured to allow the insertion of the positioning protrusion 41, of the positioning recess 51 is larger than or equal to the width of the positioning protrusion 41. Thus, the positioning protrusion 41 may be conveniently fitted in the positioning recess 51 both in a process of assembling the case 1 and the main body part 2 and a process of inserting the main body part 2 into the case 1 by a producer, in such a way, the relative rotation between the case 4 and the main body part 5 is effectively prevented by the coordination between the positioning protrusion 41 and the positioning recess 51, and in addition, when the positioning recess 51 receives a part or all of the positioning protrusion 41, the position of the case connecting hole is consistent with that of the main body connecting hole, thus, each connecting member may be inserted into the corresponding case connecting hole and main body connecting hole smoothly. Further, in accordance with the photoelectric sensor provided by embodiment 1, the relative rotation between the case 1 and the main body part 2 may also be effectively prevented by a structure defined by the positioning protrusion 41 and the positioning recess 51 in the using process, therefore the positioning stability between the case 1 and the main body part 2 is ensured both in the mounting process and in the using process. With such a structure, not only is the production efficiency of the photoelectric sensor greatly improved and the rejection rate in the production process is reduced, so that the labor cost and the production cost are reduced, but also damage of the photoelectric sensor caused by the relative rotation between the case 1 and the main body part 2 in the using process may also be avoided.

More specifically, as shown in Fig. 1 of the description below, according to embodiment 1 of the present invention, the positioning protrusion 41 is configured to be a columnar protrusion provided on the inner surface of the circumferential wall of the front end part of the case 1, and the positioning recess 51 is configured to be a V-shaped groove provided in a corresponding position on the outer surface of the circumferential wall of the main body part 2. With such a structure, the positioning protrusion 41 may be fitted in the positioning recess 51 easily, and the positioning protrusion 41 may be positioned at the V-shaped top end of the positioning recess 51, thus the relative rotation between the case 1 and the main body part 2 is prevented by a simple structure. However, it is evident that the present invention is not limited thereto, those skilled in the art may randomly select the shape of the positioning recess 51 in accordance with actual use and design requirements, for instance, the positioning recess 51 may be a semicircular groove, a rectangular groove or a strip-type groove configured to penetrate through the outer surface of the circumferential wall of the main body part 2 in the longitudinal direction, as long as the positioning recess 51 may accommodate a part or all of the positioning protrusion 41.

The preferred embodiments of the present invention have been described above, and those skilled in the art may make various variations in accordance with the preferred embodiments described above without departing from the scope of the present invention. A variant of the present invention is further illustrated with reference to Fig. 2 of the description as follows.

The Fig. 2 of the description below is a sectional view of the photoelectric sensor according to embodiment 2 of the present invention. The photoelectric sensor in embodiment 2 is basically similar to the photoelectric sensor in embodiment 1 in terms of structure, and the difference therebetween is that: in embodiment 2, the positioning recess 51 is configured to be a strip-type groove in the inner surface of the circumferential wall of the rear end part of the case 1, and the positioning protrusion 41 is configured to be a strip-type boss provided in a position, corresponding to the positioning recess 51, on the outer surface of the circumferential wall of the main body part 2. By employing such a structure, in the process of assembling the case 1 and the main body part 2, a producer may fit the positioning protrusion 41 into the positioning recess 51 along the insertion direction (i.e., the extension direction of the strip-type groove and the strip-type protrusion) conveniently in a process of inserting the main body part 2 to the case 1, and in this way, the relative rotation between the case 4 and the main body 5 is effectively prevented by the boss-groove coordination between the positioning protrusion 41 and the positioning recess 51. Other components in embodiment 2 are similar to structures in embodiment 1 described above, and will not be repeatedly described herein.

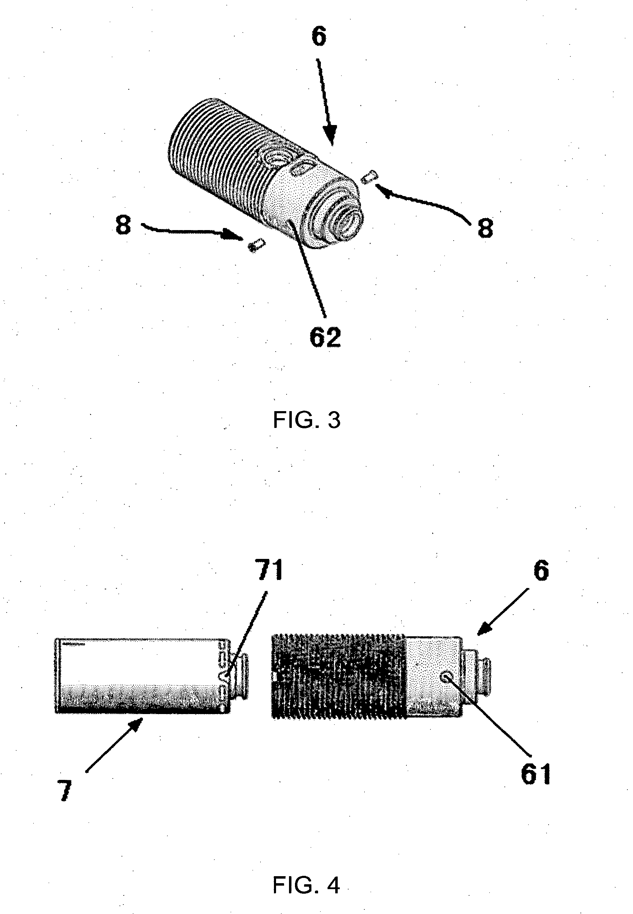

Fig. 3 of the description below is a sectional view of the photoelectric sensor according to an example. Fig. 4 of the description is an exploded schematic view of the photoelectric sensor according this example. The photoelectric sensor provided in accordance with this example includes a case 6 and a main body part 7 set inside the case 6; the case 6 is cylindrical, and the main body part 7 is columnar; and in addition, the circumferential wall of the case 6 is provided with at least one case connecting hole 62, and the outer surface of the circumferential wall of the main body part 7 is also provided with at least one main body connecting hole (not shown in the figure), and the case 6 and the main body part 7 are fixedly connected together by at least one connecting member 8 configured to be inserted into the case connecting hole 62 and the main body connecting hole. Further, the photoelectric sensor provided in accordance with this example further includes: a positioning through hole 61 provided on the circumferential wall of the case 6, and a positioning recess 71 provided on the outer surface of the circumferential wall of the main body part 7; and when the position of the positioning recess 71 is consistent with that of the positioning through hole 61, the position of the case connecting hole 62 is consistent with that of the main body connecting hole. More specifically, in this example, at least one case connecting hole 62, at least one main body connecting hole and at least one connecting member 8 define a one-to-one correspondence relation. It should be noted that the case connecting hole of the embodiment 1 may be the same or similar in structure, position and function as the case connecting hole 62 of this example, and the connecting members of the embodiment 1 may be the same or similar in structure, position and function as the connecting members 8 of this example.

More specifically, as shown in Figs. 3 and 4 of the description below, in this example, the photoelectric sensor includes: a positioning through hole 61 provided on the circumferential wall of the case 6, and a positioning recess 71 provided in a position, corresponding to the positioning through hole 61, on the outer surface of the circumferential wall of the main body part 7. When the position of the positioning recess 71 is consistent with that of the positioning through hole 61, the position of the case connecting hole 62 is consistent with that of the main body connecting hole. More specifically, in this example, in a process of assembling the case 6 and the main body part 7, a producer inserts a positioning member (which may be a positioning pin or other similar members) into the positioning through hole 61 in the circumferential wall of the case 6 at first, and then fits the positioning member configured to be inserted into the positioning through hole 61 into the positioning recess 71 in the outer surface of the circumferential wall of the main body part 7 in a process of setting the main body part 7 into the case 6. Under such circumstance, the position of the case connecting hole 62 is consistent with that of the main body connecting hole. In this way, the relative rotation between the case 6 and the main body part 7 is prevented by the positioning member, and thus each connecting member 8 may be inserted into the corresponding case connecting hole 62 and main body connecting hole smoothly. After the case 6 and the main body part 7 are fixedly connected together through the connecting member 8, the producer may select to pull the positioning member out of the positioning through hole 61 or fixedly mount the positioning member in the positioning through hole 61, which is determined in accordance with actual design and use requirements. More specifically, in this example, the positioning member may be a protrusion or a positioning pin and the like provided in a corresponding position of equipment fixture for assembling the case 6 and the main body part 7, and may also be an independent member configured to be manually operated by the producer, which may be determined in accordance with actual design and use requirements for those skilled in the art.

Further, in the embodiments and the example described above, the case is a metal case. However, the present invention is not limited thereto, and those skilled in the art may optionally select materials of the case and the main body part in accordance with actual use and design requirements.

Furthermore, except for concrete structures in two embodiments described above, those skilled in the art may make various variants in accordance with a basic design concept of the present invention, without going beyond the scope claimed by claims below of the present invention. For instance, in the embodiments described above, an anti-rotating structure only includes a positioning through hole or a positioning protrusion, however, it is obvious for those skilled in the art to optionally select the quantity and setting mode of the positioning through hole or the positioning protrusion in accordance with actual use and design requirements, as long as the anti-rotating structure formed in such a way may prevent the relative rotation between the main body part and the case.

## Claims

1. A photoelectric sensor, comprising: a case (1, 6); and
a main body part (2, 7) set inside the case (1, 6), wherein
the case (1, 6) is cylindrical and the main body part (2, 7) is columnar; and further, the circumferential wall of the case (1, 6) is provided with at least one case connecting hole (62), the outer surface of the circumferential wall of the main body part (2, 7) is also provided with at least one main body connecting hole, and the case (1, 6) and the main body part (2, 7) are fixedly connected together by at least one connecting member (8) configured to be inserted into the case connecting hole (62) and the main body connecting hole; and
the photoelectric sensor further comprises: a positioning protrusion (41) and a positioning recess (51, 71), one of the positioning protrusion (41) and the positioning recess (51, 71) is provided on the inner surface of the circumferential wall of the case (1, 6), the other is provided on the outer surface of the circumferential wall of the main body part (2, 7), and the positioning recess (51, 71) is suitable for receiving a part or all of the positioning protrusion (41); and
when the positioning recess (51, 71) receives a part or all of the positioning protrusion (41), the position of the case connecting hole (62) is consistent with that of the main body connecting hole;
the opening width of an opening, configured to allow the insertion of the positioning protrusion (41), of the positioning recess (51, 71) is larger than or equal to the width of the positioning protrusion (41); and
when the main body part (2, 7) is set inside the case (1, 6), a part or all of the positioning protrusion (41) is positioned in the positioning recess (51, 71).

2. The photoelectric sensor according to Claim 1, wherein the positioning recess (51, 71) is a V shape groove.

3. The photoelectric sensor according to Claim 1 or 2, wherein, the case (1, 6) is a metal case.

## Patentansprüche

1. Photoelektrischer Sensor, aufweisend:
ein Gehäuse (1, 6); und
einen Hauptteil (2, 7), der im Gehäuse (1, 6) angeordnet ist, wobei:
das Gehäuse (1, 6) zylindrisch und der Hauptteil (2, 7) säulenförmig ist; weiterhin die umlaufende Wand des Gehäuses (1, 6) mit wenigstens einem Gehäuseverbindungsloch (62) versehen ist, die äußere Oberfläche der umlaufenden Wand des Hauptteils (2, 7) ebenfalls mit wenigstens einem Hauptteilverbindungsloch versehen ist, und das Gehäuse (1, 6) sowie der Hauptteil (2, 7) durch wenigstens ein Verbindungselement (8) fest miteinander verbunden werden, welches eingerichtet ist, in das Gehäuseverbindungsloch (62) und das Hauptteilverbindungsloch eingeführt zu werden; und
der photoelektrische Sensor ferner einen Positioniervorsprung (41) und eine Positionierausnehmung (51, 71) aufweist, wobei eins von Positioniervorsprung (41) und Positionierausnehmung (51, 71) auf einer inneren Oberfläche der umlaufenden Wand des Gehäuses (1, 6) vorgesehen ist und das andere von Positioniervorsprung (41) und Positionierausnehmung (51, 71) auf der äußeren Oberfläche der umlaufenden Wand des Hauptteils (2, 7) vorgesehen ist, und wobei die Positionierausnehmung (51, 71) geeignet ist, einen Teil des oder den gesamten Positioniervorsprung (41) aufzunehmen;
wenn die Positionierausnehmung (51, 71) einen Teil des oder den gesamten Positioniervorsprung (41) aufnimmt, dann stimmt die Position des Gehäuseverbindungslochs (62) überein mit der Position des Gehäuseverbindungslochs;
die Öffnungsbreite einer Öffnung der Positionierausnehmung (51, 71), die zum Einführen des Positioniervorspungs (41) eingerichtet ist, ist größer oder gleich der Breite des Positioniervorspungs (41); und
wenn das Hauptteil (2, 7) innerhalb des Gehäuses (1, 6) platziert ist, dann ist ein Teil des oder der gesamte Positioniervorspung (41) in der Positionierausnehmung (51, 71) positioniert.

2. Photoelektrischer Sensor gemäß Anspruch 1, wobei die Positionierausnehmung (51, 71) ein V-förmige Nut ist.

3. Photoelektrischer Sensor gemäß Anspruch 1 oder 2, wobei die das Gehäuse (1, 6) ein Metallgehäuse ist.

## Revendications

1. Capteur photoélectrique comprenant : un boîtier (1, 6) ; et
une partie formant corps principal (2, 7) placée à l'intérieur du boîtier (1, 6) ; dans lequel :
le boîtier (1, 6) est cylindrique et la partie formant corps principal (2, 7) est en forme de colonne ; en outre, la paroi circonférentielle du boîtier (1, 6) est pourvue d'au moins un trou de raccordement (62) du boîtier, la surface extérieure de la paroi circonférentielle de la partie formant corps principal (2, 7) est également pourvue d'au moins un trou de raccordement du corps principal, et le boîtier (1, 6) ainsi que la partie formant corps principal (2, 7) sont raccordés de manière fixe l'un à l'autre par au moins un élément de raccordement (8) configuré pour être inséré dans le trou de raccordement (62) du boîtier et le trou de raccordement du corps principal ; et
le capteur photoélectrique comprend en outre : une saillie de positionnement (41) et un évidement de positionnement (51, 71), l'un de la saillie de positionnement (41) et de l'évidement de positionnement (51, 71) est disposé(e) sur la surface intérieure de la paroi circonférentielle du boîtier (1, 6), l'autre est disposé(e) sur la surface extérieure de la paroi circonférentielle de la partie formant corps principal (2, 7), et l'évidement de positionnement (51, 71) est approprié pour recevoir tout ou partie de la saillie de positionnement (41) ; et
lorsque l'évidement de positionnement (51, 71) reçoit tout ou partie de la saillie de positionnement (41), la position du trou de raccordement (62) du boîtier concorde avec celle du trou de raccordement du corps principal ;
la largeur d'ouverture d'une ouverture, configurée pour permettre l'insertion de la saillie de positionnement (41), de l'évidement de positionnement (51, 71) est supérieure ou égale à la largeur de la saillie de positionnement (41) ; et
lorsque la partie formant corps principal (2, 7) est placée à l'intérieur du boîtier (1, 6), tout ou partie de la saillie de positionnement (41) est positionné(e) dans l'évidement de positionnement (51, 71).

2. Capteur photoélectrique selon la revendication 1, dans lequel l'évidement de positionnement (51, 71) est une rainure en V.

3. Capteur photoélectrique selon la revendication 1 ou 2, dans lequel le boîtier (1, 6) est un boîtier métallique.
